# EUROPEAN PATENT APPLICATION

(11) **EP 1 108 349 A1**
(43) Date of publication of application: **20.06.2001**
(21) Application number: 00204043.4
(22) Date of filing: 17.11.2000
(51) Int. Cl.: A01B 11/00

(54) **A plough**

(30) Priority: 13.12.1999 NL 1013835
(71) Applicant: Lely Research Holding AG, 6300 Zug (CH)
(72) Inventor: Piek, Dirk Arij, 8317 RD Kraggenburg (NL)
(74) Representative: Corten, Maurice Jean F.M.

(57) **Abstract**

The invention relates to a plough (1), provided with a frame (3) with at least one plough body (4) that comprises a mouldboard (5), said plough body (4) also comprising a pre-cutting element (7), such as e.g. a plough share (8), by means of which pre-cutting element (7) during ploughing at least part of a strip of soil is cut loose. According to the invention, the plough (1) comprises drivable actuating means (9) with the aid of which during ploughing at least part of the plough body (4) is set in motion relative to the plough (1).

## Description

The invention relates to a plough, provided with a frame with at least one plough body that comprises a mouldboard, said plough body also comprising a pre-cutting element, such as e.g., a plough share, by means of which pre-cutting element during ploughing at least part of a strip of soil is cut loose.

Such a plough is known. With the known plough, via the wheels of a vehicle by which the plough is propelled, such as e.g. a tractor, the power of the tractor is transmitted to the ground. Particularly in heavy conditions, such as e.g. heavy clay and a humid soil, the wheels of the tractor may slip sometimes. This has a harmful effect on the soil structure. Furthermore, the tractive power of the tractor, which is transmitted to the ground by the wheels, is decisive for the maximum number of plough bodies present in the plough.

It is an objective of the invention to provide a plough that requires less tractive force relative to the normal conventional plough.

According to the invention, this is achieved in that the plough comprises drivable actuating means with the aid of which during ploughing at least part of the plough body is set in motion relative to the plough. By setting part of the plough body in motion, the frictional force between the plough body and the ground is reduced, as a result of which the required tractive force decreases as well. It is noticed that by plough body are meant those parts of the plough that come into contact with the ground during ploughing and ensure that a strip of soil is cut loose and/or turned. According to an inventive feature, the pre-cutting element and/or the mouldboard are/is set in motion. According to again another inventive feature, the actuating means are driven hydraulically and/or electrically and/or via a power take-off shaft of a vehicle, such as e.g. a tractor. According to a further inventive feature, the motion is an oscillating motion, more in particular a shaking or vibrating motion. For the purpose of starting the motion, according to an inventive feature, the drivable actuating means comprise an eccentric drive. According to again another inventive feature, the eccentric drive is connected to a rod which is set in an oscillating motion by the drive. According to again another inventive feature, the rod is connected directly or indirectly to the pre-cutting element and/or the mouldboard. According to again another inventive feature, the rod is connected to the mouldboard and/or the pre-cutting element via a connecting beam, such as e.g. a leg. In a particular embodiment of the invention, the pre-cutting element is constituted by a skim coulter. By means of the skim coulter only a limited part of the strip of soil is cut loose, whereafter by means of the subsequent part of the plough body the remaining part of the strip of soil is cut loose and turned. In again another embodiment of the invention, the mouldboard can also be set in vibration. For the sake of simplicity the pre-cutting element is then called mouldboard. According to a further inventive feature, the pre-cutting element or the mouldboard comprises a guide means in which respectively at least part of the mouldboard or the pre-cutting element is located. The guide means ensures that the mouldboard or the pre-cutting element is supported during ploughing. In a particular embodiment of the invention the guide means is constituted by a groove.

The invention also relates to a method of reducing the tractive force required during ploughing, in which a plough, in particular the plough as described in the foregoing, is provided with a frame with at least one plough body with a mouldboard and a pre-cutting element, whereby during ploughing the entire plough or at least part thereof is set in motion by drivable actuating means. In a particular embodiment of the invention, the plough body or at least part thereof is set in motion. According to a further inventive feature, the motion is a vibrating motion. According to again another inventive feature, viewed in the direction of travel of the plough, the motion comprises a reciprocating motion component. An experiment has proved that it is very advantageous to choose the number of movements per minute approximately in a range from 500 to 1200. According to again another inventive feature, the distance over which the movement is performed is approximately in a range from 5 to 10 millimetres. In a preferred embodiment of the invention said distance amounts preferably to 7 or 8 millimetres.

The invention will now be explained in further detail with reference to an exemplary embodiment, in which:
Figure 1 is a side view of a plough according to the invention;
Figure 2 is a bottom view of the plough shown in Figure 1, and
Figure 3 shows a detail of a plough body, more in particular the mouldboard and the plough share.

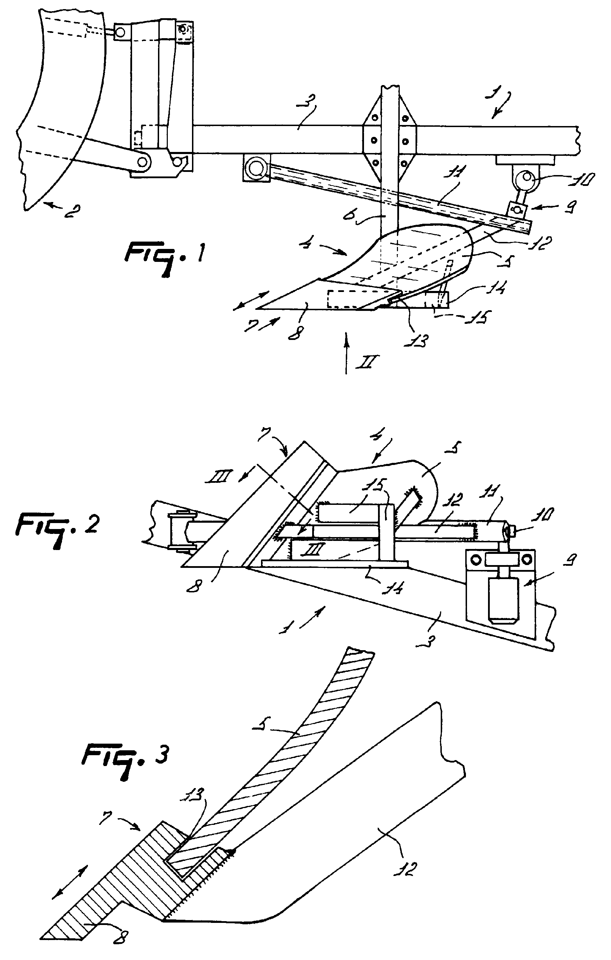

Figure 1 is a side view of a part of a plough 1 which is coupled to a tractor 2 and which is provided with a frame 3 with a plough body 4. The plough body 4 comprises a mouldboard 5 that is connected to the frame 3 via a leg 6. The plough body 4 is further provided with a pre-cutting element 7 which is constituted in the present embodiment by a plough share 8. The plough 1 is further provided with drivable actuating means 9 with the aid of which the pre-cutting element 7 can be set in motion during ploughing. The drivable actuating means 9 comprise an eccentric drive 10 that is connected to the frame 3. One end of the eccentric drive 10 is connected to a rod 11 whose other end is hingeably connected to the frame 3. By the eccentric drive 10 the rod 11 is set in an oscillating motion. The rod 11 is connected to a further rod 12 whose other end is connected to the plough share 8 (Figure 2 and Figure 3). As shown in Figure 3, the plough share 8 comprises a guide means 13 which is constituted in the present embodiment by a groove in which the mouldboard 5 is located. During ploughing the plough share 8 is moved in a reciprocating manner by the eccentric drive 10 and can be supported by the mouldboard 5. The reciprocating movement amounts approximately to 7 - 8 millimetres, while the number of vibrations is in a range from 500 to 1200 per minute. As shown in Figures 1 and 2, the mouldboard 5 further comprises a landside 14 which is connected to the mouldboard via a connecting construction 15.

During ploughing the drivable actuating means are driven e.g. by the power take-off shaft of the tractor and/or by the hydraulic circuit of the tractor. In this manner the extra power that is still available with the tractor is optimally used during ploughing. This makes it possible to pull a big plough by means of a tractor with a relatively small capacity. The plough shown in Figures 1 to 3 may also be provided with a skim coulter that can also be set in vibration by the drivable actuating means 9.

## Claims

1. A plough (1), provided with a frame (3) with at least one plough body (4) that comprises a mouldboard (5), said plough body (4) also comprising a pre-cutting element (7), such as e.g. a plough share (8), by means of which pre-cutting element (7) during ploughing at least part of a strip of soil is cut loose, characterized in that the plough (1) comprises drivable actuating means (9) with the aid of which during ploughing at least part of the plough body is set in motion relative to the plough (1).

2. A plough as claimed in claim 1, characterized in that the pre-cutting element (7) and/or the mouldboard (5) are/is set in motion.

3. A plough as claimed in claim 1 or 2, characterized in that the actuating means (9) are driven hydraulically and/or electrically and/or via a power take-off shaft of a vehicle, such as e.g. a tractor (2).

4. A plough as claimed in any one of the preceding claims, characterized in that the motion is an oscillating motion, more in particular a shaking or vibrating motion.

5. A plough as claimed in any one of the preceding claims, characterized in that the drivable actuating means (9) comprise an eccentric drive (10).

6. A plough as claimed in claim 5, characterized in that the eccentric drive (10) is connected to a rod (11) which is set in an oscillating motion by the drive.

7. A plough as claimed in claim 6, characterized in that the rod (11) is connected directly or indirectly to the pre-cutting element (7) and/or the mouldboard (5).

8. A plough as claimed in claim 7, characterized in that the rod (11) is connected to the mouldboard (5) and/or the pre-cutting element (7) via a connecting beam (12), such as e.g. a leg (6).

9. A plough as claimed in any one of the preceding claims, characterized in that the pre-cutting element (7) is constituted by a skim coulter.

10. A plough as claimed in any one of the preceding claims, characterized in that the pre-cutting element (7) is constituted by the mouldboard (5).

11. A plough as claimed in any one of the preceding claims, characterized in that the pre-cutting element (7) or the mouldboard(5) comprises a guide means (13) in which respectively at least part of the mouldboard (5) or the pre-cutting element (7) is located.

12. A plough as claimed in claim 11, characterized in that the guide means (13) is constituted by a groove.

13. A method of reducing the required tractive force during ploughing, in which a plough (1), in particular the plough (1) as described in any one of claims 1 to 12, is provided with a frame (3) with at least one plough body (4) with a mouldboard (5) and a pre-cutting element (7) and whereby during ploughing the entire plough (1) or at least part thereof is set in motion by drivable actuating means (9).

14. A method as claimed in claim 13, characterized in that that the motion is a vibrating motion.

15. A method as claimed in claim 13 or 14, characterized in that, viewed in the direction of travel of the plough (1), the motion comprises a reciprocating motion component.

16. A method as claimed in any one of claims 13 to 15, characterized in that the number of movements per minute is approximately in a range from 500 to 1200.

17. A method as claimed in any one of claims 13 to 16, characterized in that the distance over which the movement is performed is approximately in a range from 5 to 10 millimetres.

18. A method as claimed in claim 17, characterized in that the distance amounts preferably to 7 or 8 millimetres.
